Europäisches Patentamt

European Patent Office

Office européen des brevets

(11) Veröffentlichungsnummer: **0 369 066**
**A1**

(12) # EUROPÄISCHE PATENTANMELDUNG

(21) Anmeldenummer: 88202587.7

(22) Anmeldetag: 17.11.88

(51) Int. Cl.⁵: **B02C 13/284, A23G 1/06**

(43) Veröffentlichungstag der Anmeldung:
**23.05.90 Patentblatt 90/21**

(84) Benannte Vertragsstaaten:
**BE CH DE ES FR GB IT LI NL**

(71) Anmelder: **WIENER & CO. APPARATENBOUW B.V.**
**Oostenburgervoorstraat 1-3**
**NL-1018 MN Amsterdam(NL)**

(72) Erfinder: **Bauermeister, Joachim**
**Waitzstrasse 46**
**D-2000 Hamburg 52(DE)**

(74) Vertreter: **Hoijtink, Reinoud et al**
**OCTROOIBUREAU ARNOLD & SIEDSMA**
**Sweelinckplein 1**
**NL-2517 GK Den Haag(NL)**

(54) Verfahren zur Erhöhung des Produktdurchsatzes bei Siebprallmühlen durch rotierende Siebe oder Siebaustragselemente.

(57) Vorgestellt wird ein Verfahren zur Erhöhung des Produktdurchsatzes bei Siebmühlen, die Produkte verarbeiten, welche bei der Zerkleinerung von der festen in die flüssige Phase übergehen. Die Produktdurchsatzerhöhung wird erreicht durch Rotation des Siebkorbes, wodurch zusätzliche Trägheitskräfte (Zentrifugalkräfte) zur Überwindung der Zähigkeitskräfte im Bereich des Siebdurchtrittes auf das Produkt aufgebracht werden.

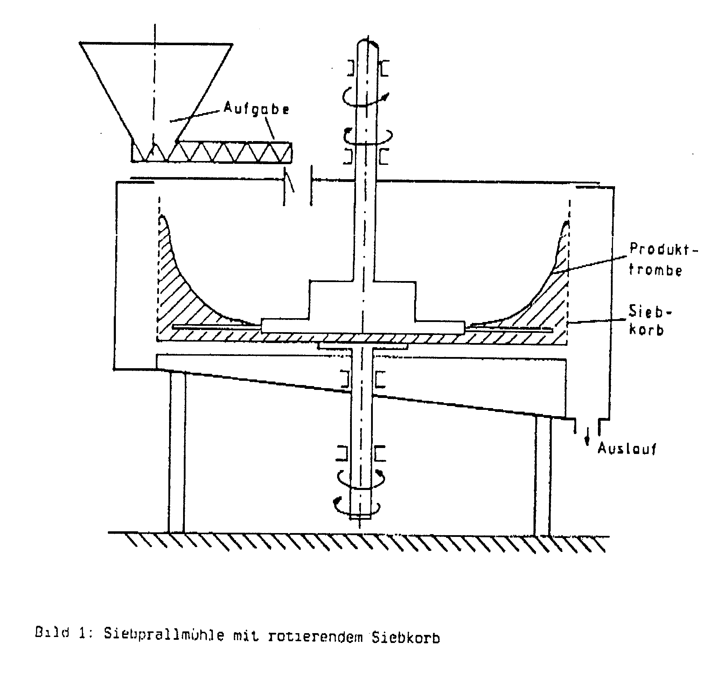

Bild 1: Siebprallmuhle mit rotierendem Siebkorb

EP 0 369 066 A1

## Verfahren zur Erhöhung des Produktdurchsatzes bei Siebprallmühlen durch rotierende Siebe oder Siebaustragselemente

Die Erfindung bezieht sich auf die Vermahlung von Produkten in Siebmühlen, die während der Zerkleinerung eine Phasenumwandlung von fest in flüssig erfahren. Dabei wird zur Erhöhung der Trägheitskräfte gegenüber den Zähigkeitskräften das Produkt einer zusätzlichen Radialbeschleunigung im Bereich des Siebdurchtrittes durch Rotation unterworfen. Dadurch erhöht sich der auf die freie Siebfläche bezogene Produktdurchsatz.

Die Zerkleinerung erfolgt üblicherweise durch rotierende Mahlwerkzeuge, z.B. Schlagleisten oder -hämmer, die das Produkt durch Prall zerkleinern und in Umfangsrichtung beschleunigen, so dass sich in der durch Phasenumwandlung erzeugten Suspension (das austretende und sich erwärmende Fett bei Ölsaaten bildet dabei die kontinuierliche Phase) eine Rotationsströmung einstellt.

Bei bekannten Siebmühlen dieser Art bildet sich infolge dieser Rotationsströmung eine Produkttrombe innerhalb des vom Sieb begrenzten Mahlraumes aus, wie in Bild 1 dargestellt.

Nachteil dieser Siebprallmühlen ist der auf die freie Siebfläche bezogene geringe Produktdurchsatz. Dazu folgendes Beispiel:

Bei der Zerkleinerung von Kakaokernen, wobei durch das austretende Fett eine Phasenumwandlung erfolgt, hat die entstehende Suspension bei einer Temperatur von 80 °C eine Viskosität von $\eta$ - 1.2 Pas. Bezogen auf diese Viskosität beträgt bei den bekannten Mühlen dieser Art und für die erforderliche Feinheit benötigten Siebloch oder Siebspalt weiten der auf die Siebfläche $A$ bezogene Produktmassenstrom $\dot{m}$:

$\dot{m}/A = 0,7$ t/h m²

Das entspricht bei $p = 1$ t/m³

$\dot{V}/A = 0,7$ m³/h m² = 0,0002 m/s

Die Erklärung für den niedrigen Durchsatz liegt an der geringen freien Durchtrittsfläche bei Sieben dieser Art. Die relativen freien Durchtrittsflächen $\phi$ liegen bei Werten von $0,1 < \phi < 0,2$. Die Verwendung von Sieben mit grösseren relativen freien Durchtrittsflächen ist jedoch nur begrenzt möglich infolge der Erfüllung folgender drei Anforderungskriterien an die Siebe:

1. Kleine Durchgangsöffnungen, da hierdurch die Produktfeinheit bestimmt wird. Zur Einhaltung einer Oberkorngrenze von 200 μm dürfen die maximalen Durchtrittsweiten diesen Wert nicht überschreiten.

2. Die Siebmaschinen- bzw. die Siebspaltweiten dürfen nur eng tolerierten Streuungen unterliegen, da sonst die Kornverteilungskurven des erhaltenen Produktes zu breit werden: d.h. es müssen Präzisionssiebe verwendet werden.

3. Die verwendeten Siebe sind starkem Verschleiss und starker Schlagbeanspruchung ausgesetzt. Das bedeutet, dass feinmaschige Siebdrahtgewebe wegen zu kurzer Standzeiten nicht verwendet werden können. Vielmehr müssen stabile, dickwandige Lochbleche bzw. Spaltsiebzylinder verwendet werden.

Die Erfüllung dieser drei Anforderungen führ zu Sieben mit den bereits genannten Werten für die relativen freien Durchtrittsflächen von $\phi$ = 0,1 bis 0,2. Da der Produktdurchsatz nun nicht durch Erhöhung der Durchtrittsfläche gesteigert werden kann, wird die Durchtrittsgeschwindigkeit durch die vorhandene Fläche erhöht. Dazu muss das Druckgefälle entlang des Siebdurchtrittes erhöht werden, was auf zweierlei Weise geschehen könnte:

1. Anlegen eines äusseren Vakuums oder inneren Überdrucks.

2. Durch die Erzeugung von Flichkräften im Bereich der Durchtrittsflächen.


Zu 1:

Da die Durchtrittsflächen nich zu jeder Zeit und unentwegt mit Produkt belegt sind, ist auch kein druckdichter Abschluss zwischen Mahlraum uns Austragsraum möglich. Dies wird durch die ebenfalls bekannte Betriebsweise unter Vakuum bewiesen. Hierbei erfolgt durch das Anlegen von Unterdruck eine Entgasung und Entfeuchtung des Produktes: Durchsatzerhöhungen wurden hierbei jedoch nicht erzielt.


Zu 2:

Wird durch Rotation des Siebkorbes dem Produkt im Bereich des Siebdurchtrittes zusätzlich in radialer Richtung beschleunigt, wird Produkt, welches sich im Bereich einer Austragsöffnung befindet schneller aus dem Mahlraum ausgetragen.

Der Drehsinn der Rotation des Siebkorbes ist produktabhängig. Im Falle einer gleichsinnigen Rotation verringern sich die Relativgeschwindigkeiten zwischen Mahlorgan und Produktpartikeln: der für die Zerkleinerungswirkung erforderliche Impuls wird schwächer. Gleichsinnige Rotation von Siebkorb und Mahlorgan kann nur im Falle leicht mahlbarer Produkte verwendet werden.

Bei schwer mahlbaren Produkten erfolgt die Rotation des Siebkorbes im entgegengesetzten Sinne zur Rotation des Mahlwerkzeuges. Im überwiegenden Teil des Mahlraumes rotiert das Produkt im gleichen Sinne wie die Mahlorgane. Lediglich im Bereich der Austragssiebe erfolgt, nach Durchlaufen der neutralen Zone, Richtungsumkehr.

**Ansprüche**

1. Verfahren zur Zerkleinerung von Produkten, insbesondere Ölsaaten, die durch den Fettaustritt und die Erwärmung während des Zerkleinerns von der festen in die flüssige Phase übergehen, in Siebmühlen, dadurch gekennzeichnet, dass die Siebe rotieren, wodurch infolge erhöhter Zentrifugalkräfte der Produktdurchsatz erhöht wird.

2. Verfahren nach Anspruch 1, dadurch gekennzeichnet, dass die Siebe oder der Siebkorb im Falle leicht mahlbarer Produkte in gleichem Drehsinn wie das Mahlorgan rotiert.

3. Verfahren nach Anspruch 2, dadurch gekennzeichnet, dass die Siebe, oder der Siebkorb in entgegengesetzter Richtung zum Mahlorgan rotieren, dadurch erfolgt eine Richtungsumkehr der Suspension, die im Zerkleinerungsbereich gleichsinnig mit dem Mahlorgan umläuft, dann eine neutrale Zone mit der Umfangsgeschwindigkeit Null durchläuft um schliesslich im Bereich der Siebe entgegengesetzter Zentrifugalbeschleunigung ausgesetzt zu werden.

4. Verfahren nach Anspruch 3, dadurch gekennzeichnet, dass die Zerkleinerung in üblicher Weise durch umlaufende Werkzeuge erfolgt und das feste Aufgabeprodukt durch Fettaustritt und Erwärmung zur Suspension wird mit von Produkt und Temperatur abhängiger Zähigkeit.

5. Verfahren nach Anspruch 4, dadurch gekennzeichnet, dass als Austragsorgan Siebe mit kleinen, eng tolerierten Löchern bzw. Schlitzen verwendet werden, da hierdurch die Freiheit des zerkleinerten Produktes bestimmt wird.

Bild 1: Siebprallmühle mit rotierendem Siebkorb

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | SOVIET INVENTIONS ILLUSTRATED, Abschnitt P, Woche B26, Klasse P, Zusammenfassung Nr. F6834B/26, 8. August 1979, Derwent Publications Ltd, London, GB; & SU-A-622 454 (KLEBAN A.S.) 17-07-1978 * Zusammenfassung * --- | 1,3 | B 02 C 13/284 A 23 G 1/06 |
| E | DE-A-3 714 835 (J. BAUERMEISTER) * Spalte 1, Zeilen 1-35 * --- | 1-5 | |
| A | US-A-2 853 244 (J.A. PLIMPTON) * Spalte 1, Zeilen 51-70; Figur 1 * --- | 1,2,5 | |
| A | EP-A-0 157 896 (HERMANN BAUERMEISTER MASCHINENFABRIK GmbH) * Seite 3, Zeile 35 – Seite 4, Zeile 12 * ----- | 1,5 | |
| | | | **RECHERCHIERTE SACHGEBIETE (Int. Cl.5)** |
| | | | B 02 C A 23 G |

Der vorliegende Recherchenbericht wurde für alle Patentansprüche erstellt

| Recherchenort | Abschlußdatum der Recherche | Prüfer |
|---|---|---|
| DEN HAAG | 20-06-1989 | OECHSNER DE CONINCK S.P. |